**Europäisches Patentamt**

**European Patent Office**

**Office européen des brevets**

(19)

(11) Veröffentlichungsnummer: **0 062 627**
**B1**

(12) # EUROPÄISCHE PATENTSCHRIFT

(45) Veröffentlichungstag der Patentschrift:
**29.05.85**

(51) Int. Cl.⁴: **G 10 K 5/02**, B 60 Q 5/00

(21) Anmeldenummer: **82890042.3**

(22) Anmeldetag: **18.03.82**

(54) **Vorrichtung zum Erzeugen hochfrequenter Schallwellen.**

(30) Priorität: **20.03.81 AT 1338/81**

(43) Veröffentlichungstag der Anmeldung:
**13.10.82 Patentblatt 82/41**

(45) Bekanntmachung des Hinweises auf die Patenterteilung:
**29.05.85 Patentblatt 85/22**

(84) Benannte Vertragsstaaten:
**BE CH DE FR GB IT LI NL SE**

(56) Entgegenhaltungen:
**CH - A - 136 199**
**DE - A - 1 580 448**
**DE - B - 1 015 247**
**DE - B - 1 235 775**
**US - A - 2 678 625**
**US - A - 4 150 637**

(73) Patentinhaber: **Hoffelner, Volkwin,**
**Hötzendorfergasse 10A, A-3423 St. Andrä-Wördern (AT)**

(72) Erfinder: **Hoffelner, Volkwin, Hötzendorfergasse 10A,**
**A-3423 St. Andrä-Wördern (AT)**

(74) Vertreter: **Köhler-Pavlik, Johann, Dipl.-Ing.,**
**Margaretenplatz 5, A-1050 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine Vorrichtung zur Erzeugung hochfrequenter Schallwellen zwischen 14 und 26 kHz in Form einer Lippenpfeife, vorzugsweise zur Befestigung an Kraftfahrzeugen, zum Betriebe durch den Fahrtwind, mit Einrichtungen zum Erzeugen eines Unterdrucks im Bereich hinter der Schneide der Lippenpfeife.

Der Erfindung liegt die Aufgabe zugrunde, eine Pfeife zu schaffen, welche, am Auto montiert, trotz des niedrigen Luftdruckes, wie er beim Fahrtwind von Kraftfahrzeugen entsteht, anspricht.

Bekannte Pfeifen zum Erzeugen hochfrequenter Schallwellen, etwa im Bereich zwischen 14 und 26 kHz, z. B. Hundepfeifen, entsprechen dieser Forderung nicht, da es bei diesen Pfeifen, bedingt durch den geschlossenen Resonanzraum, zu einem Luftstau kommt, zu dessen Überwindung höhere Luftdrücke erforderlich sind.

In der DE-A 1 580 448 wird eine Warnpfeife der gattungsgemäßen Art beschrieben, wobei eine Schürze zur Erzielung einer Sogwirkung vorgesehen ist. Durch die Schürze kommt es aber zu unerwünschten Turbulenzen.

Die Aufgabe, eine Pfeife zu schaffen, die selbst bei geringsten Luftdrücken arbeitet, wird dadurch gelöst, daß bei der Vorrichtung der eingangs angegebenen Art erfindungsgemäß die Einrichtungen zum Erzeugen des Unterdrucks einen nach hinten offenen Kanal in Fortsetzung des offenen Resonanzraums der Lippenpfeife umfassen, dessen Querschnitt wesentlich größer als jener des Resonanzraums ist, wobei der Kanal in einem im wesentlichen kegelstumpfförmigen Körper eines Tragteils angeordnet ist, und Längsschlitze den Körper vom Kanal aus her durchbrechen.

Dadurch wird ein völlig ungehinderter Luftdurchsatz ermöglicht, der die eigentliche Pfeife schon bei geringsten Luftdrücken zum Tönen bringt.

Durch die erfindungsgemäße Ausbildung ergibt sich der Vorteil, daß es durch den Fahrtwind zu einer Sogwirkung kommt, die den Luftaustritt durch den engen Anblaskanal, an dessen Ende sich die Schneide befindet, unterstützt.

Weitere Merkmale und Vorteile der erfindungsgemäßen Vorrichtung werden im folgenden anhand der Zeichnung erläutert, welche zwei verschiedene Ausbildungsformen des Erfindungsgegenstandes veranschaulicht. Es zeigt

Fig. 1 einen Längsschnitt gemäß der Linie II-II in Fig. 2,

Fig. 2 eine Fig. 1 zugeordnete Draufsicht,

Fig. 3 eine Ansicht von vorn,

Fig. 4 ein Werkzeug (einen Entriegelungsschlüssel) zum Lösen der Vorrichtung von der Halterung,

Fig. 5 eine Teilansicht von unten in Richtung des Pfeiles V in Fig. 1 und die

Fig. 6 zeigt einen Längsschnitt der zweiten Ausführungsart.

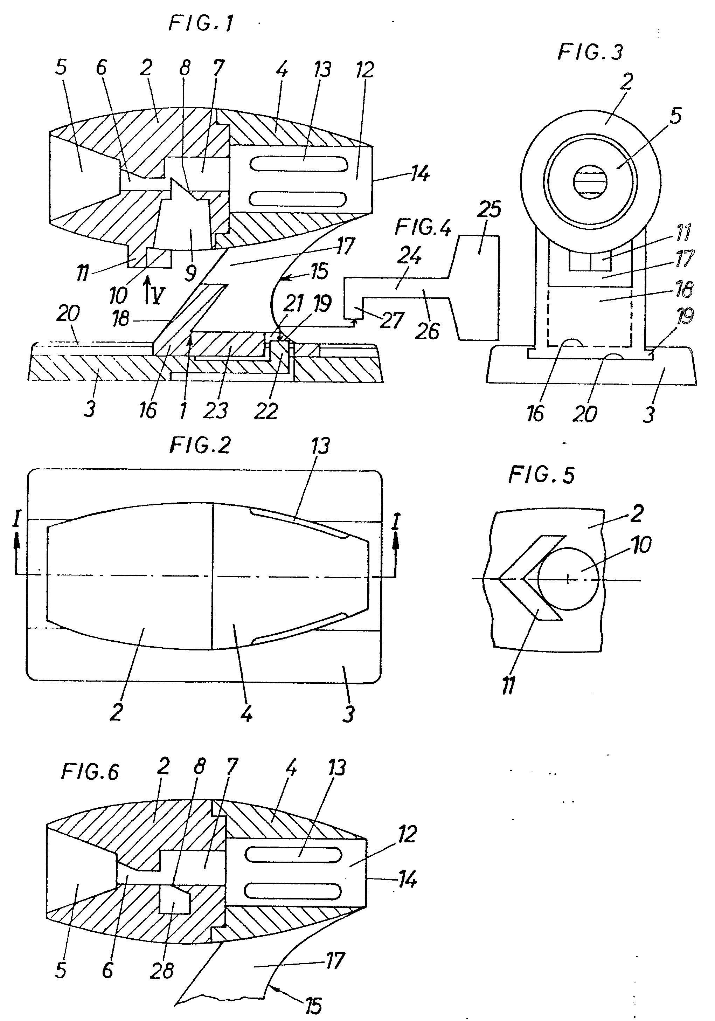

Die erfindungsgemäße Vorrichtung besteht gemäß den Fig. 1 und 2 aus dem Tragteil 1, dem Schallerzeugungskörper 2 und aus einer Grundplatte 3. Der Schallerzeugungskörper 2 hat im wesentlichen kegelstumpfähnliche Form und wird mittels einer nur angedeuteten Steckverbindung mit dem oberen Abschnitt 4 des Tragteiles 1 verbunden. Diese beiden Teile bilden zusammen eine etwa torpedoförmige Einheit, die eigentliche Pfeife.

Der Körper 2 hat an seinem vorderen Ende einen Einströmtrichter 5, von welchem ein enger Kanal 6, der Anblaskanal, mit flach-rechteckigem Querschnitt ausgeht. Dieser Anblaskanal 6 erweitert sich zu einem vorzugsweise zylindrischen und hinten offenen Resonanzraum 7. Kurz nach der Übergangsstelle zwischen Kanal 6 und Resonanzraum 7 befindet sich die scharfe Schneide 8, an welcher der Schall entsteht. Unmittelbar vor der Schneide 8 beginnt eine nach unten gerichtete Durchbrechung, der Ton- oder Schalltrichter 9, dessen untere Mündung mit 10 bezeichnet ist. Vor der Mündung 10 ist eine Schürze 11 od. dgl. Abdeckung vorgesehen, welche, wie die Fig. 5 erkennen läßt, aus zwei im stumpfen Winkel zueinander stehenden Wandabschnitten besteht.

Im oberen Abschnitt 4 des Tragteiles 1 befindet sich ein zylindrischer, beiderends offener und zum Hohlraum 7 koaxialer Hohlraum oder Kanal 12, dessen Wandung mit Schlitzen od. dgl. Durchbrechungen 13 versehen sein kann. Die hintere Öffnung dieses Kanals 12 ist mit 14 bezeichnet.

Der Tragteil 1 umfaßt außer dem oberen, schon erwähnten Abschnitt 4 den Sockel 15 und den Fußteil 16. Im Sockel 15 ist ein Fenster 17 ausgespart, welches im wesentlichen rechteckige Form hat, und dessen obere Begrenzung unmittelbar von der Unterseite des Abschnittes 4 vom Tragteil 1 gebildet ist. Unterhalb des Fensters 17 ist eine Schrägfläche 18 vorgesehen, welche genau unterhalb der Mündung 10 des Schalltrichters 9, damit in Fortsetzung desselben liegt, und als Schall-Umlenkfläche dient.

Der Fußteil 16 trägt an jeder Längsseite eine Führungsrippe 19 und kann damit in eine hinterschnittene oder schwalbenschwanzähnliche Führung 20 in der Grundplatte 3 eingeschoben werden.

Zur Sicherung des Tragteiles 1 samt Pfeife an der Grundplatte 3 ist im Fußteil 16 eine Bohrung 21 vorgesehen, die zum Einrasten eines Sicherungsstiftes 22 dient, der sich am Ende einer federnden Zunge 23 befindet. Diese Zunge 23 ist vorzugsweise einstückig mit der aus Kunststoff erzeugten Grundplatte 3; auch die Teile 1 und 2 bestehen vorzugsweise aus Kunststoff.

Um den Fußteil 16 bis zum Einrasten des Stiftes 22 in die Bohrung 21 einschieben zu können, sowie um den Fußteil aus der Sicherung wieder zu lösen, ist der in Fig. 4 gezeigte Schlüssel 24 erforderlich. Er besteht aus einem Griff 25, einem Schaft 26 und einem vom Schaft 26 rechtwinkelig abstehenden Bart 27, der in die Bohrung 21 im Fußteil 16 eindringen kann, um den Sicherungsstift 22 aus der Bohrung 21 hinauszudrücken, wenn der Fußteil 16 aus der Grundplatte 3 hinausgeschoben werden soll. Um den Fußteil ganz einschieben zu können, genügt es, denselben bis zum Anstoßen am Stift 22 einzuschieben, diesen Stift mit dem Schlüssel 24 niederzudrücken und sodann den Fußteil weiterzuschieben, bis der Stift 22 in die Bohrung 21 einschnappt.

Bei der in Fig. 6 gezeigten Ausführungsform, welche in ihrem wesentlichen Aufbau weitestgehend der Ausbildungsart nach den Fig. 1 bis 3 und 5 gleicht, ist anstelle des Schalltrichters 9 ein geschlossener Resonanzraum 28 vorgesehen, der unmittelbar unter der Schneide 8 liegt. Die Schrägfläche 18 und die Schürze 11 sind bei dieser Ausführungsart nicht vorgesehen.

Die erfindungsgemäße Vorrichtung hat die folgende Wirkungsweise:

Der torpedoartige Hauptkörper bildet die eigentliche Pfeife. Der Fahrtwind tritt durch den Trichter 5 ein, der die Luft zu dem flachen Anblaskanal 6 lenkt. Die Luft bricht sich an der Schneide 8 und verteilt sich einerseits in den Schalltrichter 9 und andererseits in den hinten offenen Kanal 12, der als Schwingungserzeugerraum wirkt. Vom Resonanzraum 7 strömt ein Teil der Luft zu dem im Durchmesser um ein Vielfaches größeren Kanal 12. Diese abrupte Querschnittsvergrößerung ist notwendig, um die auf Grund der Länge des Raumes 7 entstandenen Schwingungen nicht mehr durch den Kanal 12 zu verändern bzw. mitzuformen. Die durch den Kanal 12 streichende Luft entweicht durch die Öffnung 14 oder durch die seitlichen Schlitze 13 od. dgl. Durchbrechungen. Der gesamte hintere Teil der Pfeife ist so ausgebildet, daß der darüber hinwegstreichende Wind im Kanal 12 einen Unterdruck erzeugt, wodurch der Luftdurchsatz der Pfeife verstärkt wird. Die beim Schalltrichter 9 austretenden, hochfrequenten Schallwellen werden durch die schräge Fläche 18 nach vorne reflektiert bzw. gespiegelt. Der Fahrtwind, der ebenfalls auf der Fläche 18 anprallt, wird durch das Fenster 17 abgeleitet, sodaß die Luft nicht in den Trichter 9 hineindrückt. Die Schürze 11 unter der Schallaustrittsöffnung (Mündung 10) soll dort ebenfalls einen Unterdruck erzeugen.

Bei der in Fig. 6 gezeigten Ausführungsform ist ebenfalls der soeben beschriebene offene Luftdurchgang gegeben.

Selbstverständlich können im Rahmen der Erfindung noch weitere konstruktive Abänderungen vorgenommen werden, ohne daß das Geoffenbarte überschritten werden müßte.

## Patentansprüche

1. Vorrichtung zur Erzeugung hochfrequenter Schallwellen zwischen 14 und 26 kHz in Form einer Lippenpfeife, vorzugsweise zur Befestigung an Kraftfahrzeugen, zum Betriebe durch den Fahrtwind, mit Einrichtungen zum Erzeugen eines Unterdrucks im Bereich hinter der Schneide der Lippenpfeife, dadurch gekennzeichnet, daß die Einrichtungen zum Erzeugen des Unterdrucks einen nach hinten offenen Kanal (12) in Fortsetzung des offenen Resonanzraums (7) der Lippenpfeife umfassen, dessen Querschnitt wesentlich größer als jener des Resonanzraums (7) ist, wobei der Kanal (12) in einem im wesentlichen kegelstumpfförmigen Körper (4) eines Tragteils (1) ist, und Längsschlitze (13) den Körper (4) vom Kanal (12) aus her durchbrechen.

2. Vorrichtung nach Anspruch 1, dadurch gekennzeichnet, daß der kegelstumpfförmige Körper (4) mit einem weiteren etwa kegelstumpfförmigen Körper (2) verbunden ist, in welchem der Resonanzraum (7), die Schneide (8), und der Anblaskanal (6) in Verbindung mit einem an sich bekannten Einströmtrichter (5) angeordnet sind, wobei beide Körper (2, 4) eine torpedoförmige Einheit bilden.

3. Vorrichtung nach Anspruch 2, dadurch gekennzeichnet, daß von dem die Schneide (8) enthaltenden Resonanzraum (7) ein vor der Schneide (8) beginnender, nach unten führender Schalltrichter (9) ausgeht, und daß vor der Mündung (10) des Schalltrichters (9) eine Schürze (11) angeordnet ist.

4. Vorrichtung nach Anspruch 3, dadurch gekennzeichnet, daß gegenüber der Mündung (10) des Schalltrichters (9) eine den Schall nach vorn umlenkende Schrägfläche (18) vorgesehen ist.

5. Vorrichtung nach den Ansprüchen 1 und 3, dadurch gekennzeichnet, daß der Tragteil (1) einen den kegelstumpfförmigen Körper (4) tragenden Sockel (15) aufweist, in welchem sich hinter der am kegelstumpfförmigen Körper (4) angebrachten Schürze (11) ein Fenster (17) befindet.

## Claims

1. A device for generating sound waves at relatively high frequencies in the range of 14 to 26 kHz, consisting of a flue pipe, preferably for being mounted on a motor vehicle, for actuation by the relative wind, comprising means for generating a subatmospheric pressure in the region behind a sharp edge of the flue pipe, characterized in that the means for generating a subatmospheric pressure comprise a passage (12) which continues an open resonant chamber (7) of the flue pipe and is open at its rear end and is much larger in cross-section than the resonant chamber (7), whereby the passage (12) is formed in a substantially frustoconical body (4) of a carrier (1), which has longitudinal through slots (13) extending from the passage (12) through body (4).

2. A device according to claim 1, characterized in that the frustoconical body (4) is joined to another frustoconical body (2), which contains the resonant chamber (7), the sharp edge (8) and the blowing passage (6) communicating with an inlet funnel (5) as known per se and that both bodies (2, 4) form a unit shaped like a torpedo.

3. A device according to claim 2, characterized in that the resonant chamber (7) contains the sharp edge (8), a horn (9), which begins in front of the sharp edge (8), extends downwardly from the resonant chamber, and an apron (11) is provided in front of the mouth (10) of the horn (9).

4. A device according to claim 3, characterized in that a beveled surface (18) for deflecting the sound forwardly faces the mouth (10) of the horn (9).

5. A device according to claims 2 and 3, characterized in that the carrier (1) is constituted by the frustoconical body (4) of a bracket (15), which comprises a window (17) behind the apron (11), which is mounted on the frustoconical body (4).

Revendications

1. Dispositif pour la génération des ondes sonores entre 14 et 26 kHz en forme d'un sifflet à lèvres, préférablement pour être monté aux véhicules, fonctionnant par le vent de vitesse comprenant des moyens à produire une pression atmosphérique de dessous dans la région derrière la carne du sifflet à lèvres, caracterisé en ce que les moyens à produire la pression atmosphérique de dessous sont constitués d'un passage (12) ouvert en arrière en continuation de la chambre de résonance (7) du sifflet à lèvres, la section transversale du passage étant essentiellement plus grande que celle de la chambre de résonance (7), ce passage (12) étant arrangé dans un corps (4) d'un support (1) essentiellement en forme de cône tronqué et que des fentes (13) longitudinales étendent du passage (12) par le corps (4).

2. Dispositif selon la revendication 1, caracterisé en ce que le corps (4) en forme de cône tronqué est relié avec un second corps (2) environ en forme de cône tronqué, dans lequel sont disposés la chambre de résonance (7), la carne (8) et le passage sifflant (6) en relation avec un entonnoir (5) d'affluence connu, les deux corps (2, 4) formant un ensemble en forme de torpille.

3. Dispositif selon la revendication 2, caracterisé en ce que la chambre de résonance (7) contient la carne (8) avant de laquelle commence un pavillon (9) qui s'étend vers la bas et qu'avant la bouche (10) du pavillon est disposé un tablier (11).

4. Dispositif selon la revendication 3, caracterisé en ce que vis à vis de la bouche (10) du pavillon (9) est pourvu une surface oblique (18) défléchissant le son en avant.

5. Dispositif selon les revendications 2 et 3, caracterisé en ce que le support (1) a un socle (15) qui porte le corps (4) en forme de cône tronqué, dans lequel se trouve une fenêtre (17) derrière le tablier (11) monté au corps (4) en forme de cône tronqué.

FIG.1

FIG.2

FIG.3

FIG.4

FIG.5

FIG.6